# EUROPEAN PATENT SPECIFICATION

(11) **EP 3 480 094 B1**
(45) Date of publication and mention of the grant of the patent: **11.03.2020**
(21) Application number: 17856244.3
(22) Date of filing: 27.09.2017
(51) Int. Cl.: B62K 19/38, B60T 11/06, B62J 11/00, B62J 99/00, B62K 19/30, B62L 3/08, B62L 3/04, B62K 11/04, B62M 7/02

(54) **SADDLE-RIDING TYPE VEHICLE**
SATTELFAHRZEUG
VÉHICULE DU TYPE À SELLE

(30) Priority: 30.09.2016 JP 2016194562
(43) Date of publication of application: 08.05.2019
(73) Proprietor: Honda Motor Co., Ltd., Tokyo 107-8556 (JP)
(72) Inventor: MIYAZAKI, Go, Wako-shi Saitama 351-0193 (JP); SATO, Koji, Wako-shi Saitama 351-0193 (JP); NOZAWA, Hironori, Wako-shi Saitama 351-0193 (JP)
(74) Representative: Beder, Jens
(86) International application number: PCT/JP2017/035006
(87) International publication number: WO 2018/062295

(56) References cited:
- WO-A1-2014/147900
- CN-Y- 2 880 658
- JP-A- 2010 047 232
- JP-A- 2013 224 107
- JP-A- 2014 046 798
- JP-A- 2014 046 799
- JP-A- 2014 046 799
- JP-A- 2014 162 453

## Description

### [Technical Field]

The present invention relates to a saddle-riding type vehicle.

### [Background Art]

JP 2014 162453 A discloses all of the features of the preamble of claim 1.

Conventionally, there is known a saddle-riding type vehicle equipped with a linked brake system configured to combine braking by a front wheel brake with operation of a rear wheel brake (for example, refer to Patent Literature 1). In a linked brake system like this, when a front wheel brake and a rear wheel brake are both drum brakes, an equalizer, which is connected to both the rear wheel brake and the front wheel brake, is attached to a brake actuator for the rear wheel brake, and the equalizer is connected to the front wheel brake by a linking brake cable. In Patent Literature 1, the brake actuator of the rear wheel brake is disposed on a right side of a body, and the linking brake cable extends once to the rear from a connecting portion with the equalizer, thereafter, is bent to extend to the front, and is then laid out along a right side of a main tube.

### [Citation List]

### [Patent Literature]

[Patent Literature 1]
Japanese Patent Laid-Open No. 2014-46799

### [Summary of Invention]

### [Technical Problem]

Incidentally, cable-shaped members such as the linking brake cable and a harness of an electrical system are laid out efficiently by being disposed in such a manner as to follow a body frame. When the front wheel brake is disposed on a left side of the body, the linking brake cable that extends from the brake actuator on the right side of the body is disposed to pass across the body from the right to the left. However, when the linking brake cable is caused to follow the right side of the main tube as in Patent Literature 1, the linking brake cable interrupts laying out the harness and the like along the right side of the main tube, thereby making it difficult to lay out the harness and the like in that way. Additionally, the linking brake cable is desirably laid out with an appropriate curvature for smooth operation.

The present invention has been made in view of the situations described above, and an object thereof is to improve the degree of freedom in arrangement of a cable-shaped member and to enable a linking brake cable to be laid out with an appropriate curvature.

### [Solution to Problem]

To achieve the object described above, according to the present invention, there is provided a saddle-riding type vehicle comprising: a body frame (F) comprising a main tube (15) extending from a headstock (14) to a rear of a vehicle body and a seat rail (18L, 18R) extending from the main tube (15) to the rear; a front wheel brake (58) configured to brake a front wheel (2); a rear wheel brake (61) configured to brake a rear wheel (3); and a linked brake system (70) configured to apply a braking force to the front wheel brake (58), too, in association with operation of a brake actuator (38) of the rear wheel brake (61), the front wheel brake (58) being a drum brake disposed on a left side of the vehicle body, the brake actuator (38) being disposed on a right side of the vehicle body, the linked brake system (70) comprising an equalizer (71) configured to be attached to the brake actuator (38) and a linking brake cable (72) configured to connect together the equalizer (71) and the front wheel brake (58), the linking brake cable (72) pulled out from the equalizer (71) to the rear extending to a front via a curved portion (91) projecting to the rear to be connected to the front wheel brake (58),
wherein the linking brake cable (72) is passed from the right side of the vehicle body to the left side of the vehicle body below the seat rail (18L, 18R) and extends to the front of the vehicle body along a left side of the main tube (15).

According to the configuration of the present invention, the linking brake cable pulled out to the rear from the equalizer attached to the brake actuator on the right side of the vehicle body extends to the front via the curved portion projecting to the rear to be connected to the front wheel brake on the left side of the vehicle body, and the linking brake cable is passed from the right side of the vehicle body to the left of the vehicle body below the seat rail and extends to the front of the vehicle body along the left side of the main tube. This allows the linking brake cable 72 to be passed from the right side of the vehicle body to the left side of the vehicle body in the position lying near the curved portion below the seat rail at the rear of the main tube, whereby the portion where the linking brake cable is passed from the right side of the vehicle body to the left side of the vehicle body and the curved portion can be curved moderately. This can reduce the curvature of the linking brake cable and can hence reduce the resistance in operating the linking brake cable, whereby the linking brake cable can be operated smoothly. Since the linking brake cable is passed to the left side on the seat rail side and then extends to the front of the vehicle body along the left side of the main tube, a space can be secured on a right side of the main tube, whereby a cable-shaped member can be disposed in the space.

In the saddle-riding type vehicle of the present invention, a configuration may be adopted in which the linking brake cable (72) is passed from the right side of the vehicle body to the left side of the vehicle body below the seat rail (18L, 18R) after the linking brake cable (72) is directed to the front of the vehicle body at a portion thereof lying closer to the front wheel brake (58) than the curved portion (91).

According to the configuration of the prevent invention, since the linking brake cable is passed from the right side of the vehicle body to the left side of the vehicle body below the seat rail after the linking brake cable is directed to the front of the vehicle body at the portion thereof lying closer to the front wheel brake than the curved portion (91), the curved portion is prevented from being curved largely in the left-right direction. This can reduce the resistance in operating the linking brake cable on the circumference of the curved portion, whereby the linking brake cable can be operated smoothly.

In the saddle-riding type vehicle of the present invention, a configuration may be adopted in which the linking brake cable (72) comprises a lower straight-line portion (92) and an upper straight-line portion (93) across the curved portion (91), and the lower straight-line portion (92) and the upper straight-line portion (93) are supported on the vehicle body.

According to the configuration of the present invention, the linking brake cable comprises the lower straight-line portion and the upper straight-line portion across the curved portion, and the lower straight-line portion and the upper straight-line portion are supported on the vehicle body. Due to this configuration, since the curved portion is not supported directly, providing a high degree of freedom in deflection of the curved portion, the curved portion deflects easily, whereby the linking brake cable can be operated smoothly.

In the saddle-riding type vehicle of the present invention, a configuration may be adopted in which the seat rail (18L, 18R) comprises a pair of left and right tubes, and after the linking brake cable (72) is pulled out to the rear from the equalizer (71) and is supported on the seat rail (18R) on a right side, the linking brake cable (72) is passed from the right side of the vehicle body to the left side of the vehicle body and is supported on the seat rail (18L) on a left side.

According to the configuration of the present invention, the seat rail comprises the pair of left and right tubes, and after the linking brake cable is pulled out to the rear from the equalizer and is supported on the seat rail on the right side, the linking brake cable is passed from the right side of the vehicle body to the left side of the vehicle body and is supported on the seat rail on the left side. This allows the linking brake cable to be supported on the vehicle body side before and after the portion where the linking brake cable is passed from the right side of the vehicle body to the left side of the vehicle body, whereby the layout routing of the linking brake cable can be maintained as required.

In the saddle-riding type vehicle of the present invention, a configuration may be adopted in which the seat rail (18L, 18R) comprises a pair of left and right tubes, and the linking brake cable (72) is laid out in a space between a rear mudguard (47) and the seat rail (18L, 18R) and extends to the front along the seat rail (18L) on the left side to be laid out to the front of the vehicle body along the left side of the main tube (15) via a connecting portion (90) between the main tube (15) and the seat rail (18L) on the left side.

According to the configuration of the present invention, the linking brake cable is laid out in the space between the rear mudguard and the pair of left and right seat rails and extends to the front along the seat rail on the left side to be laid out to the front of the vehicle body along the left side of the main tube via the connecting portion between the main tube and the seat rail on the left side. This allows the linking brake cable to be laid out by making effective use of the space between the rear mudguard and the seat rail, whereby the linking brake cable can be guided to the left side by a simple structure made up of the connecting portion between the main tube and the seat rail on the left side.

Further, in the saddle-riding type vehicle of the present invention, a configuration may be adopted in which an intake system part (30) is disposed below the seat rail (18L, 18R) and ahead of the rear mudguard (47), and the linking brake cable (72) is laid out between the seat rail (18L, 18R) and the intake system part (30).

According to the configuration of the present invention, the linking brake cable is laid out between the seat rail and the intake system part. This allows the linking brake cable to be laid out by making effective use of the space between the seat rail and the intake system part.

In addition, in the saddle-riding type vehicle of the present invention, a configuration may be adopted in which an air cleaner box (33) of the intake system part (30) is disposed side by side with a battery (50) in a vehicle width direction, the battery (50) is positioned below the seat rail (18R) on the right side, and a main harness (51) connected to the battery (50) is laid out along a right side of the main tube (15).

According to the configuration of the present invention, the battery is positioned below the seat rail on the right side, and the main harness connected to the battery is laid out along the right side of the main tube. This allows the main harness to be laid out from the battery disposed on the right side of the vehicle body below the seat rail on the right side along the right side of the main tube, whereby the main harness is easily laid out on the opposite side to the linking brake cable.

### [Advantageous Effects of Invention]

According to the present invention, the curvature of the linking brake cable can be reduced, whereby the linking brake cable can be operated smoothly. The space can be secured on the right side of the main tube, whereby the cable-shaped member can be disposed in this space.

The curved portion can be prevented from being curved largely in the left-right direction, whereby the resistance in operating the linking brake cable on the circumference of the curved portion can be reduced.

Since the curved portion is not supported directly, the linking brake cable can be operated smoothly.

The linking brake cable can be supported as required before and after the portion where the linking brake cable is passed from the right side of the vehicle body to the left side of the vehicle body.

The linking brake cable can be laid out by making effective use of the space between the rear mudguard and the seat rail, and the linking brake cable can be guided to the left side by the simple structure made up of the connecting portion with the seat rail.

The linking brake cable can be laid out by making effective use of the space between the seat rail and the intake system part.

The main harness is easily laid out on the opposite side to the linking brake cable.

### [Brief Description of Drawings]

[Figure 1] Figure 1 is a right side view of a motorcycle according to an embodiment of the present invention.
[Figure 2] Figure 2 is a left side view of the motorcycle.
[Figure 3] Figure 3 is a plan view of the motorcycle as viewed from above.
[Figure 4] Figure 4 is a right side view of a longitudinal central portion of the motorcycle.
[Figure 5] Figure 5 is a right side view illustrating a structure of a circumferential portion of a brake pedal.
[Figure 6] Figure 6 is a plan view of a circumferential portion of a rear end portion of a linking brake cable as viewed from above.
[Figure 7] Figure 7 is a perspective view illustrating a state where the linking brake cable is laid out around a circumferential portion of a rear portion of a sub tube.
[Figure 8] Figure 8 is a perspective view illustrating a state where the linking brake cable is laid out around a circumferential portion of a seat rail.
[Figure 9] Figure 9 is a diagram of instruments and surroundings of the instruments when viewed from a rear upper portion.

### [Description of Embodiment]

Hereinafter, an embodiment of the present invention will be described by reference to drawings. In the description, when directions such as front-rear, left-right and up-down directions are referred to, they are considered to be the same as those directions referred to with respect to a vehicle body unless otherwise indicated. Additionally, a symbol FR denotes the front of the vehicle body, a symbol UP denotes an upward direction of the vehicle body and a symbol LH denotes the left of the vehicle body when they are shown in the drawings.

Hereinafter, the embodiment of the present invention will be described by reference to the drawings. In the description, when directions such as front-rear, left-right and up-down directions are referred to, they coincide with those directions referred to with respect to the vehicle body unless otherwise indicated. Additionally, a symbol FR denotes the front of the vehicle body, a symbol UP denotes an upward direction of the vehicle body, and a symbol LH denotes the left of the vehicle body, when they are shown in the drawings. In addition, the right of the vehicle body is denoted by a symbol RH from time to time in the drawings.

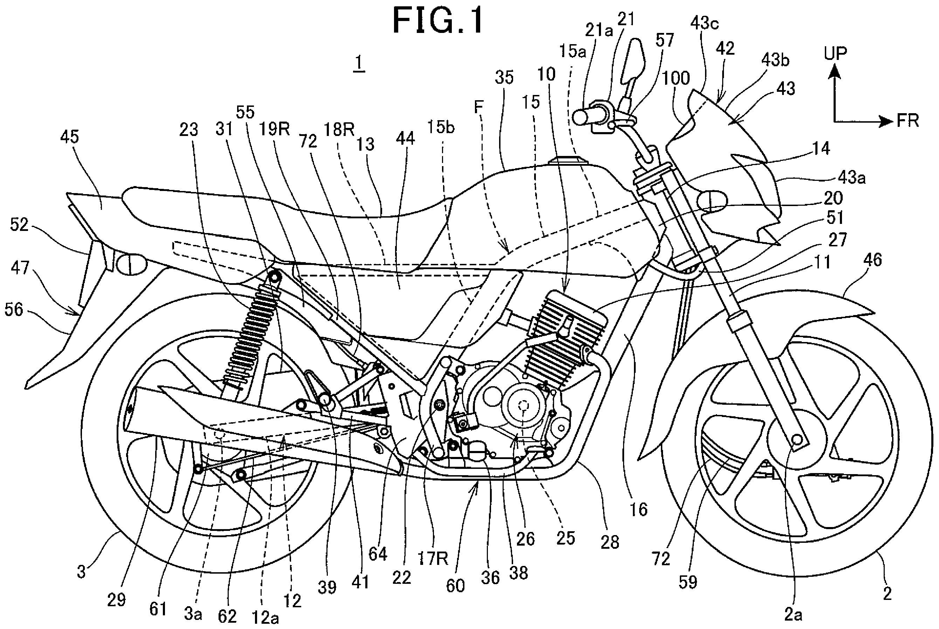

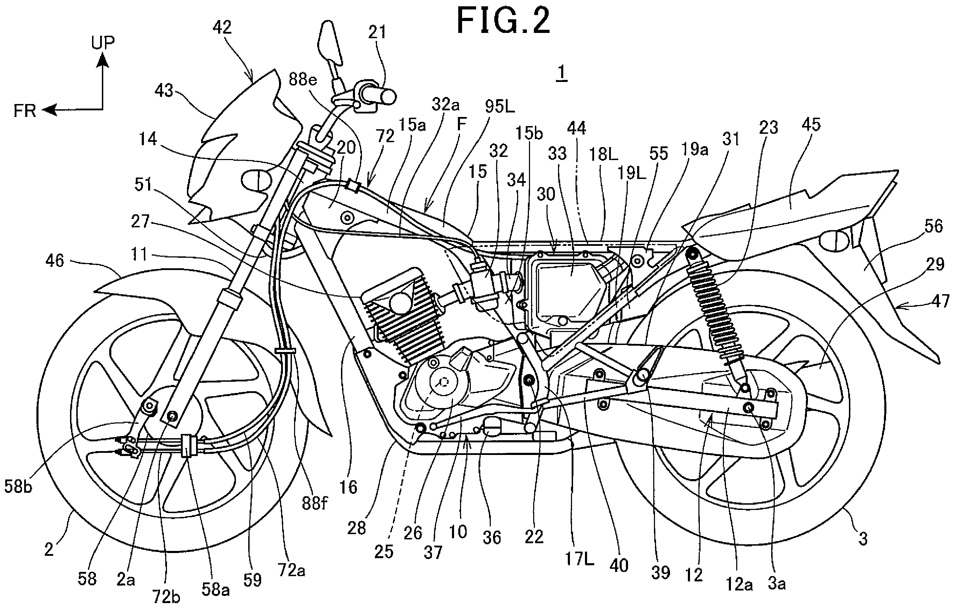

Figure 1 is a right side view of a motorcycle 1 according to an embodiment of the invention. Figure 2 is a left side view of the motorcycle 1. In Figure 2, a state is illustrated in which parts such as a seat 13, a fuel tank 35, and the like are removed.

The motorcycle 1 is a vehicle in which an engine 10 as a power unit is supported on a body frame F, a front fork 11, which is configured to support a front wheel 2 in a steerable fashion, is supported at a front end of the body frame F in a steerable fashion, and a swing arm 12, which is configured to support a rear wheel 3, is provided at a rear portion side of the body frame F. The motorcycle 1 is a saddle-riding type vehicle in which a seat 13 on which a rider is seated in such a manner as to straddle it is provided at a rear upper portion of the body frame F.

The body frame F includes a headstock 14 provided at a front end, a main tube 15 extending downward to the rear from a rear portion of the headstock 14, a down tube 16 extending downwards to the rear from the rear portion of the headstock 14 below the main tube 15, and a pair of left and right pivot tubes 17L, 17R extending downwards from a lower end portion of the main tube 15.

Additionally, the body frame F includes a pair of left and right seat rails 18L, 18R extending to the rear from a middle portion of the main tube 15, and a pair of left and right sub tubes 19L, 19R extending upwards to the rear from the pivot tubes 17L, 17R, respectively, to be connected to the seat rails 18L, 18R, respectively.

Further, the body frame F includes a front-side gusset 20 having a plate shape and configured to join together a front end of the main tube 15, a front end of the down tube 16, and the headstock 14, and rear-side gussets 19a, 19a each having a plate shape and configured to join together rear end portion of the sub tubes 19L, 19R and seat rails 18L, 18R.

Specifically, the main tube 15 is a pipe-like tube disposed at a center in a vehicle width direction and extending singly and includes a main tube front portion 15a extending to the rear downwards from the headstock 14 and a main tube rear portion 15b that is bent downwards at a rear end of the main tube front portion 15a to extend downwards to the rear.

Hereinafter, a right side of the main tube 15 positioned at the center in the vehicle width direction is assumed to be one side in the vehicle width direction and a left side of the main tube 15 is referred to as the other side in the vehicle width direction. The front wheel 2 and the rear wheel 3 are positioned at the center in the vehicle width direction.

The pivot tubes 17L, 17R extend outwards in the vehicle width direction from left and right side surfaces of the main tube rear portion 15b, respectively, and then extend downwards.

The front fork 11 is provided in a steerable fashion via a steering shaft (not shown) that is pivotally supported in the headstock 14. The front wheel 2 is supported rotatably on an axle shaft 2a at a lower end of the front fork 11. A steering handlebar 21 is provided at an upper end of the front fork 11.

A pivot shaft 22 is provided in the pivot tubes 17L, 17R in such a manner as to penetrate the pivot tubes 17L, 17R in the vehicle width direction. The swing arm 12 is pivotally supported on the pivot shaft 22 at a front end portion thereof that is disposed between the left and right pivot tubes 17L, 17R. The swing arm 12 includes left and right arm portions 12a, 12a extending in pair from an end facing the pivot shaft 22, and the rear wheel 3 is supported rotatably on an axle shaft 3a that stretches between rear end portions of the arm portions 12a, 12a.

A pair of left and right rear suspensions 23 are provided to stretch between rear portions of the arm portions 12a, 12a and rear portions of the seat rails 18L, 18R, respectively.

The engine 10 includes a crankcase 26 configured to accommodate a crankshaft 25 extending in the vehicle width direction and a cylinder portion 27 extending upwards from a front portion of the crankcase 26. A transmission (not shown) is incorporated at a rear portion of the crankcase 26.

The engine 10 is disposed between the down tube 16 and the pivot tubes 17L, 17R below the main tube 15 and is fixed to the body frame F.

An exhaust pipe 28 of the engine 10 extends downwards to the rear from a front surface of the cylinder portion 27, extends to the rear while passing below the engine 10, and is connected to a muffler 29 disposed on a right side (one side) of the swing arm 12.

The above-described transmission of the engine 10 includes an output shaft (not shown) that projects to a left side (the other side) from the rear portion of the crankcase 26. An output of the engine 10 is transmitted to the rear wheel 3 by a drive chain that stretches between the above-described output shaft and the rear wheel 3. This drive chain is covered by a chain case 31 that is provided to follow the arm portion 12a on the left side.

A fuel supply system 32 configured to supply an air-fuel mixture into the cylinder portion 27 is connected to a rear portion of the cylinder portion 27. The fuel supply system 32 is positioned on the left side of the main tube rear portion 15b. An intake system part 30 configured to supply air into the fuel supply system 32 includes an air cleaner box 33 configured to accommodate an air cleaner element and a connecting pipe 34 extending to the front from the air cleaner box 33. The air cleaner box 33 is disposed between the seat rails 18L, 18R and the sub tubes 19L, 19R behind the main tube rear portion 15b and is connected to a rear portion of the fuel supply system 32 via the connecting pipe 34.

The fuel tank 35 is provided above the main tube front portion 15a and is supported on the main tube front portion 15a. The seat 13 is disposed at the rear of the fuel tank 35 while being contiguous with the fuel tank 35 and is supported by the seat rails 18L, 18R.

A pair of left and right footrests 36, 36 where the rider rests his or her feet extend from a lower surface of the crankcase 26 along left and right sides of the crankcase 26.

An operation pedal 37 of the above-described transmission is provided near the footrest 36 on the left side, and a brake pedal 38 (a brake actuator) is provided near the footrest 36 on the right side.

Tandem footrests 39, 39 for a pillion passenger are provided at the rear of the pivot tubes 17L, 17R. The tandem footrest 39 on the left side is fixed to a footrest support tube 40 extending to the rear from the pivot tube 17L and the sub tube 19L that are disposed on the left side.

The tandem footrest 39 on the right side is fixed to a footrest bracket 41 attached to the pivot tube 17R and the sub tube 19R that are disposed on the right side.

The motorcycle 1 includes a body cover 42. The body cover 42 includes a front cover 43 configured to cover an upper portion of the front fork 11 from the front, a pair of left and right side covers 44, 44 configured to cover spaces defined between the main tube 15 and the sub tubes 19L, 19R from the side below the fuel tank 35 and the seat 13, and a rear cover 45 configured to cover the rear portions of the seat rails 18L, 18R.

Additionally, the motorcycle 1 includes a front mudguard 46 configured to cover the front wheel 2 from above and a rear mudguard 47 configured to cover the rear wheel 3 from above.

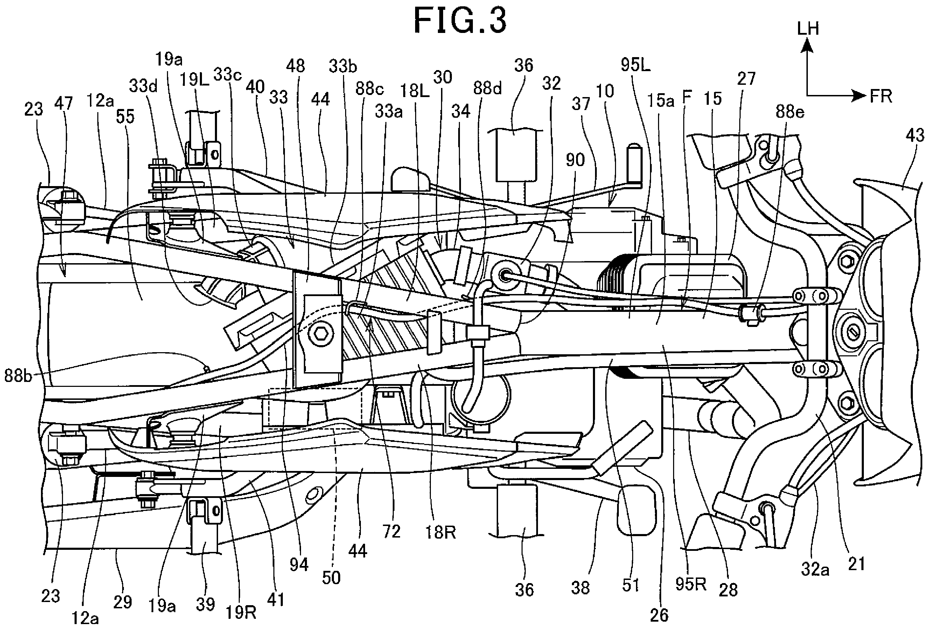

Figure 3 is a plan view of the motorcycle 1 as viewed from above. Figure 3 shows a state where the fuel tank 35, the seat 13 and the like are removed.

As illustrated in Figure 3, the left and right seat rails 18L, 18R are provided in such a manner that a space defined between them increases in the vehicle width direction as the seat rails 18L, 18R extend to the rear from front ends thereof at which the seat rails 18L, 18R are connected to the main tube 15. The seat rails 18L, 18R are positioned inwards of the sub tubes 19L, 19R in the vehicle width direction at the front of the rear mudguard 47. The seat rails 18L, 18R are coupled together in the vehicle width direction by a plate-shaped cross member 48 provided on upper surfaces of front portions of the seat rails 18L, 18R. Rear ends of the fuel tank 35 are fixed to the cross member 48.

The air cleaner box 33 is disposed below the seat rails 18L, 18R, and both lateral sides of the air cleaner box 33 are covered by the side covers 44, 44.

The air cleaner box 33 includes a box-shaped box main body 33a that is opened on an external surface (a left side surface) thereof in the vehicle width direction, a lid portion 33b configured to close an opening in the box main body 33a, an intake duct 33c provided on the lid portion 33b, and an air cleaner element (not shown). The air cleaner element is accommodated in the air cleaner box 33 and divides an interior of the air cleaner box 33 into a dirty side where air before passing through the air cleaner element flows and a clean side where air that has passed through the air cleaner element flows. The clean side is formed inside the box main body 33a.

The lid portion 33b is disposed closer to the other side (the left side) in the vehicle width direction. The intake duct 33c extending to the rear from a rear portion of the lid portion 33b is disposed inclined in plan view so that an intake port 33d at a rear end is positioned on a center side in the vehicle width direction.

The connecting pipe 34 extends to the front from a front surface of the box main body 33a and is connected to a rear portion of the fuel supply system 32.

The fuel supply system 32 and the connecting pipe 34 are disposed on the other side in the vehicle width direction with respect to the main tube 15. A throttle valve of the fuel supply system 32 is operated by a throttle cable 32a that is connected to an upper portion thereof.

The throttle cable 32a extends from an accelerator controller 21a (Figure 1) provided at an end portion of one side (a right side) of the handlebar 21 in the vehicle width direction to the center in the vehicle width direction and to the front, passes around a circumference of the headstock 14 to the other side of the handlebar 21 in the vehicle width direction, extends to the rear along a side of the main tube front portion 15a that lies on the other side, and is connected to the fuel supply system 32.

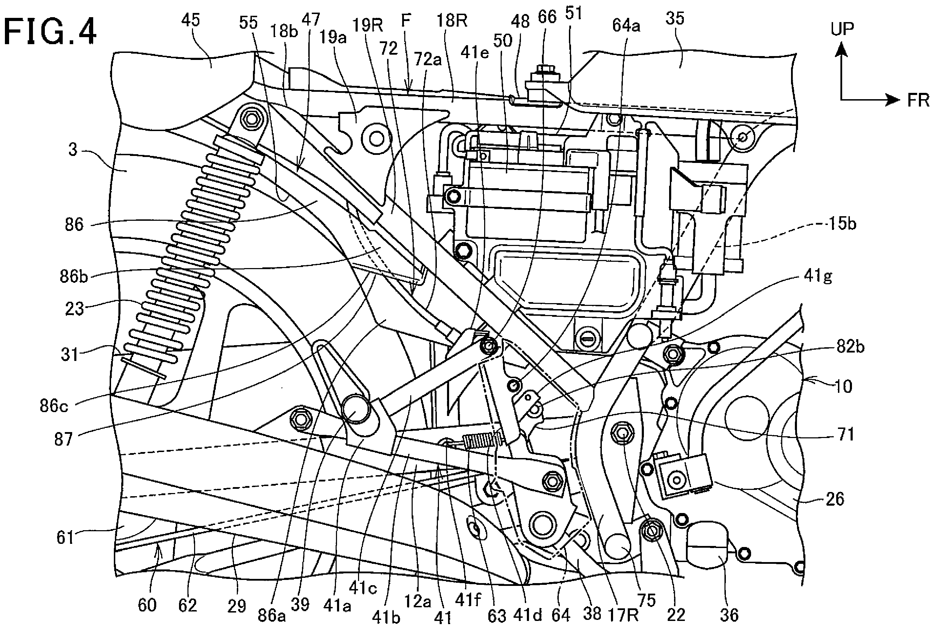

Figure 4 is a right side view of a longitudinal central portion of the motorcycle 1. Figure 4 illustrates a state where the right side cover 44 is removed.

Referring to Figures 3 and 4, a box-shaped battery 50 is provided side by side with the air cleaner box 33 in the vehicle width direction and is disposed closer to the one side (the right side) in the vehicle width direction. The battery 50 is positioned between the main tube rear portion 15b and the sub tube 19 below the seat rail 18R on the right side.

A main harness 51 of the electric system of the motorcycle 1 is pulled out from the battery 50 to the front, extends to the front towards the headstock 14 along the side surface of the main tube 15 on the one side, and is then connected to a lamp 43a (Figure 1) in the front cover 43 and switches provided on the handlebar 21. That is, the main harness 51 is laid out on a side of the main tube 15 opposite to the throttle cable 32a is disposed in the vehicle width direction.

Additionally, the main harness 51 is branched on the way to be connected to the engine 10 while extending to the rear to be connected to a lamp 52 (Figure 1) at a rear end portion of the motorcycle 1.

The rear mudguard 47 includes a rear mudguard front portion 55 that extends to the rear along the rear portions of the sub tubes 19L, 19R and the seat rails 18L, 18R while extending upwards to the rear and a rear mudguard rear portion 56 that extends to the rear from a rear end of the rear mudguard front portion 55 while extending downwards. The rear mudguard 47 is fixed to the body frame F.

The rear mudguard front portion 55 is provided to straddle the sub tubes 19L, 19R and the seat rails 18L, 18R transversely and covers the sub tubes 19L, 19R and the seat rails 18L, 18R from below. Additionally, the rear mudguard front portion 55 is positioned between the sub tubes 19L, 19R and the seat rails 18L, 18R and the rear wheel 3 and covers the rear wheel 3 from above. The rear mudguard rear portion 56 covers the rear wheel 3 from the rear and above.

Referring to Figures 1 and 2, a front wheel brake device configured to brake the front wheel 2 includes a brake lever 7 into which an operation by the rider is inputted, a front wheel brake operating portion 58 (a front wheel brake) configured to brake the front wheel 2 through friction, and a front wheel brake operating cable 59 as a front brake transfer member configured to connect the brake lever 57 and the front wheel brake operating portion 58. The front wheel brake operating portion 58 is a mechanical drum brake.

Specifically, the front wheel brake operating cable 59 extends to the center in the vehicle width direction from the brake lever 57 provided at the end portion of the handlebar 21 on the one side (the right side) thereof in the vehicle width direction and passes between the headstock 14 and the front fork 11 to extend to the other side in the vehicle width direction. Thereafter, the front wheel brake operating cable 59 curves downwards, passes a side of a rear portion of the front mudguard 46, curves then to the front, and is connected to the front wheel brake operating portion 58 disposed on the other side in the vehicle width direction.

Referring to Figures 1 and 4, a rear wheel brake device 60 configured to brake the rear wheel 3 includes the brake pedal 38 (the brake actuator) into which an operation by the rider is inputted, a rear wheel brake operating portion 61 (a rear wheel brake) configured to brake the rear wheel 3 through friction, a brake rod 62 as a rear brake transfer member configured to connect the brake pedal 38 side and the rear wheel brake operating portion 61, and a return spring 63 configured to bias the brake pedal 38 in an opposite direction to an operating direction on an operation side. The rear wheel brake operating portion 61 is a mechanical drum brake.

The motorcycle 1 includes a cover 64 configured to cover an upper portion of the brake pedal 38 from the side at the rear of the pivot tube 17.

As illustrated in Figure 4, the footrest bracket 41 includes an attachment portion 41a to which the tandem footrest 39 is attached, a lower arm 41b extending downwards to the front from the attachment portion 41a, an upper arm 41c extending upwards to the front from the attachment portion 41a, and a coupling portion 41d configured to couple together a front end of the upper arm 41c and a front end of the lower arm 41b.

Additionally, the pivot tube 17 and the sub tube 19 include, respectively, stays 65a, 65b both extending from rear surface portions of the pivot tube 17 and the sub tube 19 to the rear.

The footrest bracket 41 is fixed to the stays 65a, 65b by bolts 66, 66 that pass through a front end portion of the lower arm 41b and a front end portion of the upper arm 41c.

The muffler 29 is fixed to a rear end portion of the footrest bracket 41.

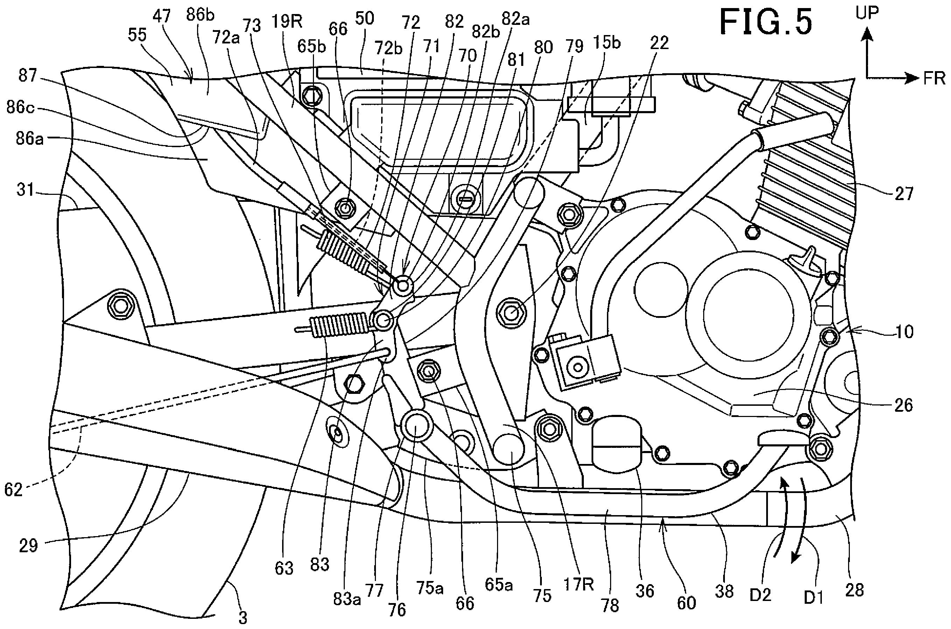

Figure 5 is a right side view illustrating a structure of a circumferential portion of the brake pedal 38. Figure 5 illustrates a state where the cover 64 and the footrest bracket 41 are removed.

Referring to Figures 4 and 5, the motorcycle 1 includes a linked brake system 70 configured to actuate the front wheel brake operating portion 58 in association with an operation of the brake pedal 38 for the rear wheel 3.

The linked brake system 70 includes the rear wheel brake device 60, an equalizer 71 rotatably supported on the brake pedal 38, the front wheel brake operating portion 58 (Figure 2), a linking brake cable 72 as an linking front brake transfer member configured to connect the equalizer 71 and the front wheel brake operating portion 58, and a delay spring 73 configured to bias the equalizer 71.

The linked brake system 70 is provided on the one side (the right side) in the vehicle width direction.

The body frame F includes a lower cross tube 75 configured to couple together lower end portions of the pivot tubes 17L, 17R in the vehicle width direction. A pedal stay 75a extending to the rear is provided at an end portion of the lower cross tube 75 that lies on the one side in the vehicle width direction.

The brake pedal 38 is rotatably supported on a pedal pivot shaft 76 fixed to the pedal stay 75a. The pedal pivot shaft 76 is a shaft that extends outwards in the vehicle width direction from the pedal stay 75a.

The brake pedal 38 includes a cylindrical pedal pivot portion 77 that fits on an outer circumferential portion of the pedal pivot shaft 76, a pedal main body portion 78 extending forwards from the pedal pivot portion 77, and an operating arm portion 79 extending upwards from the pedal pivot portion 77.

The operating arm portion 79 turns about the pedal pivot shaft 76 together with the pedal main body portion 78 when the pedal main body portion 78 is operated by the rider. An operating direction D1 in which the rider operates the pedal main body portion 78 to actuate the rear wheel brake device 60 and the front wheel brake device is a clockwise direction about the pedal pivot shaft 76 in Figure 5.

An equalizer support shaft 80 extending outwards in the vehicle width direction in parallel to the pedal pivot shaft 76 is provided at an upper end of the operating arm portion 79.

The equalizer 71 is formed into a plate shape that is elongated in an up-down direction when seen from the side. The equalizer 71 includes an equalizer pivot hole portion 81 configured to be rotatably supported on the equalizer support shaft 80 of the brake pedal 38 thereon in a middle portion in the up-down direction (a longitudinal direction).

The equalizer 71 includes integrally a front wheel brake operating arm portion 82 extending upwards from the equalizer pivot hole portion 81 and a rear wheel brake operating arm portion 83 extending downwards from the equalizer pivot hole portion 81.

The equalizer 71 includes a cable connecting portion 82a to which one end (a rear end) of the linking brake cable 72 is connected at an upper end portion of the front wheel brake operating arm portion 82. Additionally, a position restricting portion 82b projecting outwards in the vehicle width direction is provided at the upper end portion of the front wheel brake operating arm portion 82.

The equalizer 71 includes a rod connecting portion 83a to which a front end of the brake rod 62 is connected at a lower end portion of the rear wheel brake operating arm portion 83.

The equalizer 71 and the operating arm portion 79 of the brake pedal 38 are disposed between an external surface of the swing arm 12 and the footrest bracket 41 in the vehicle width direction. The equalizer 71 is positioned below a front end portion of the sub tube 19 and at the rear of the pivot tube 17 when seen from the side.

The cover 64 not only protects the linked brake system 70 but also improves an external appearance thereof by covering the equalizer 71, the operating arm portion 79, the pedal pivot shaft 76, the stay 65a, the delay spring 73, a connecting portion between the linking brake cable 72 and the equalizer 71, and the like from an external side in the vehicle width direction.

The cover 64 is fastened to the coupling portion 41d of the footrest bracket 41 by a cover fixing bolt 64a.

The footrest bracket 41 includes a cable support portion 41e configured to support the linking brake cable 72 on an upper surface of a front end portion of the upper arm 41c. The linking brake cable 72 includes an outer cable 72a having a tubular shape and an inner cable 72b provided slidably in the outer cable 72a. Specifically, in the linking brake cable 72, one end portion (a rear end portion) of the outer cable 72a is supported by the cable support portion 41e. The one end portion of the outer cable 72a is supported by the cable support portion 41e in such a manner as to extend substantially parallel to an axial direction of the sub tube 19 below the sub tube 19 when seen from the side.

One end portion (a rear end portion) of the inner cable 72b of the linking brake cable 72 is pulled out downwards to the front from the one end portion of the outer cable 72a and is connected to the cable connecting portion 82a of the equalizer 71.

The linking brake cable 72 extends upwards to the rear from the cable support portion 41e, then is bent to the front to extend towards the front wheel 2 side, and is connected to the front wheel brake operating portion 58 as illustrated in Figure 2.

Specifically, the other end portion (a front end portion) of the outer cable 72a of the linking brake cable 72 is supported in a cable stay 58a provided on the front wheel 2 side together with an outer cable of the front wheel brake operating cable 59. The other end portion (a front end portion) of the inner cable 72b of the linking brake cable 72 extends to the front from the other end portion of the outer cable 72a and is connected to an operation input arm portion 58b of the front wheel brake operating portion 58.

The other end portion of the inner cable 72b of the linking brake cable 72 is connected to the operation input arm portion 58b in parallel to an inner cable of the front wheel brake operating cable 59. Due to this, an operation by the linking brake cable 72 and an operation by the front wheel brake operating cable 59 can be inputted into the front wheel brake operating portion 58 independently of each other.

Referring to Figures 4 and 5, the brake rod 62 extends to the rear from the rod connecting portion 83a of the equalizer 71 and is connected to the rear wheel brake operating portion 61 (Figure 1) at a rear end thereof.

The return spring 63 is a helical tension spring, and the return spring 63 is connected to the equalizer support shaft 80 of the operating arm portion 79 of the brake pedal 38 at a front end and is connected to a spring support portion 41f of the lower arm 41b of the footrest bracket 41 at a rear end thereof. The return spring 63 generates a biasing force that turns the brake pedal 38 in a return direction D2 opposite to the operating direction D1. That is, when the rider releases the operation of the brake pedal 38, the brake pedal 38 is returned to its initial position by virtue of the biasing force of the return spring 63.

The delay spring 73 is a helical tension spring, and the delay spring 73 is connected to an upper end portion of the front wheel brake operating arm portion 82 of the equalizer 71 at a front end and is connected to the upper arm 41c of the footrest bracket 41 at a rear end thereof. The delay spring 73 biases the equalizer 71 in a direction in which the front wheel brake operating arm portion 82 of the equalizer 71 is turned to the rear about the equalizer support shaft 80. That is, the front wheel brake operating arm portion 82 is pulled to the rear by the delay spring 73.

The coupling portion 41d of the footrest bracket 41 includes a stopper piece 41g extending upwards to the front. The position of the front wheel brake operating arm portion 82 pulled to the rear by the delay spring 73 is restricted as a result of the position restricting portion 82b being brought into abutment with a front surface of the stopper piece 41g.

Here, referring to Figure 5, an operation of the linked brake system 70 will be described.

In Figure 5, the linked brake system 70 is in an "initial state" where the brake pedal 38 is not operated.

The operating arm portion 79 turns about the pedal pivot shaft 76 in the operating direction D1 against the biasing force of the return spring 63 when the rider operates the brake pedal 38 in the operating direction D1. The equalizer 71 supported on the equalizer support shaft 80 moves towards the operating direction D1 side (a front side) together with the operating arm portion 79 in association with the rotation of the operating arm portion 79; however, in the equalizer 71, the rod connecting portion 83a moves towards the operating direction D1 side, and the cable connecting portion 82a stays in the "initial state," until an operation amount of the brake pedal 38 in the operating direction D1 reaches a predetermined amount. Specifically, in the equalizer 71, since the front wheel brake operating arm portion 82 is pulled to the rear by the delay spring 73, the cable connecting portion 82a does not move until the operation amount of the brake pedal 38 exceeds the predetermined amount, and a force that pulls the delay spring 73 to the front exceeds a certain value.

That is, when the brake pedal 38 is operated in the operating direction D1, firstly, the brake rod 62 is pulled to the front side, whereby the rear wheel brake operating portion 61 is actuated to thereby brake the rear wheel 3.

Then, when the operation amount of the brake pedal 38 in the operating direction D1 exceeds the above-described predetermined amount, the delay spring 73 is stretched, the position restricting portion 82b moves away from the stopper piece 41g, the cable connecting portion 82a and the rod connecting portion 83a move to the front, and the front wheel brake operating portion 58 and the rear wheel brake operating portion 61 are both actuated, whereby the front wheel 2 and the rear wheel 3 are braked simultaneously.

Specifically, when the cable connecting portion 82a moves to the front, the one end portion of the inner cable 72b of the linking brake cable 72 is pulled to the front side, and the other end portion of the inner cable 72b pulls the operation input arm portion 58b (Figure 2) of the front wheel brake operating portion 58 to the rear, whereby the front wheel 2 is braked.

Even with the configuration including the linked brake system 70, the rider can brake only the rear wheel 3 by operating the brake pedal 38 to the predetermined amount or less.

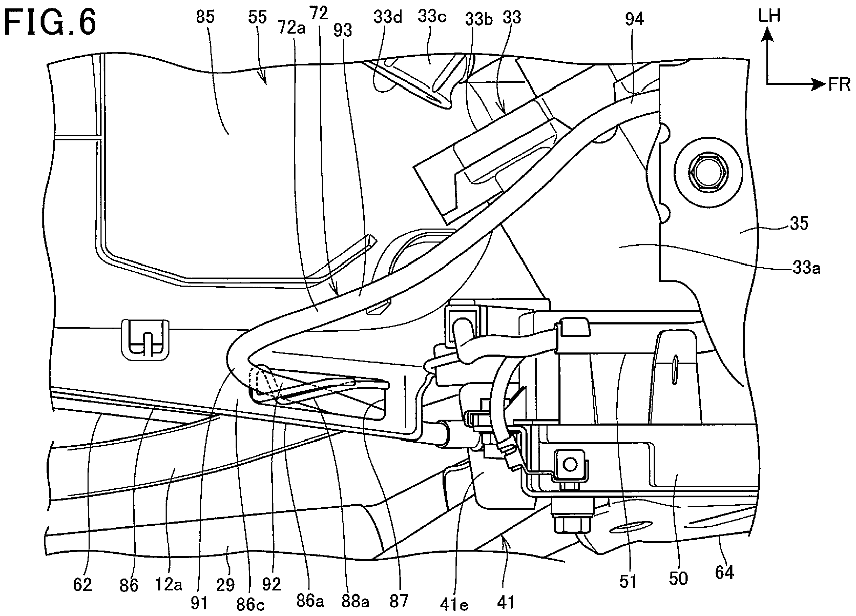

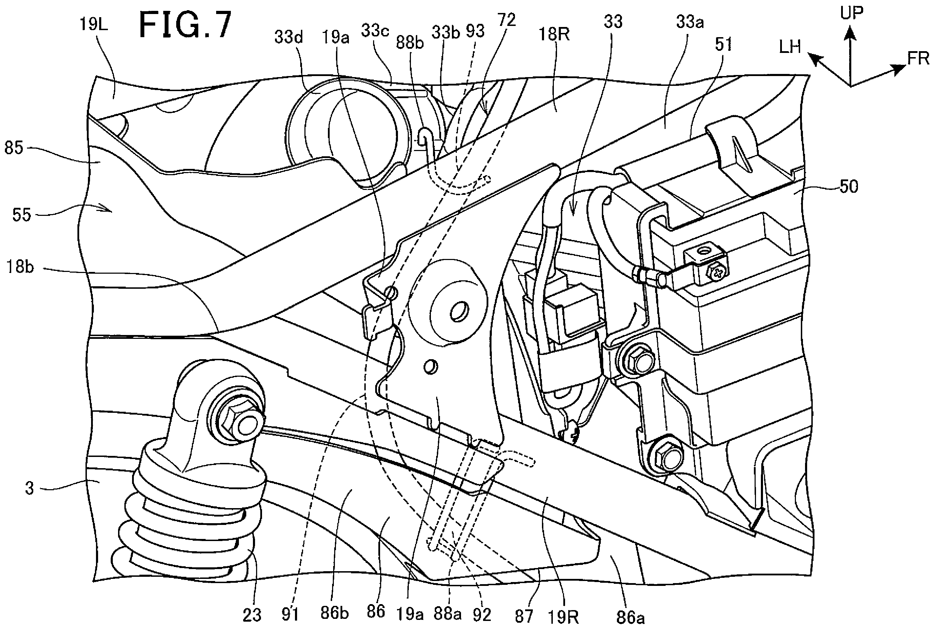

Figure 6 is a plan view of a circumferential portion of a rear end portion of the linking brake cable 72 as viewed from above. Figure 7 is a perspective view illustrating a state where the linking brake cable 72 is laid out at a circumferential portion of a rear portion of the sub tube 19R. Here, in Figure 6, the seat rail 18R, the sub tube 19R, and the like are not shown.

Referring to Figures 4, 6 and 7, the rear mudguard front portion 55 includes a mudguard upper surface portion 85 configured to cover the rear wheel 3 from above and a mudguard side surface portion 86 extending upwards from a side edge of the mudguard upper surface portion 85 towards a lower surface of the sub tube 19R.

The mudguard side surface portion 86 is formed to rise gradually to the rear so as to follow an upper surface of the rear wheel 3. The mudguard side surface portion 86 includes an inner side wall 86a formed at a lower end portion of a front portion of the mudguard side surface portion 86 and provided further inwards in the vehicle width direction than the sub tube 19R, an outer side wall 86b provided further outwards in the vehicle width direction than the inner side wall 86a above the inner side wall 86a, and a lower wall 86c extending from an upper edge of the inner side wall 86a outwards in the vehicle width direction to be connected to a lower edge of the outer side wall 86b.

The lower wall 86c is a substantially horizontal wall extending downwards to the front when seen from the side, and a lower surface thereof faces downwards with respect to the motorcycle 1. A cable passage hole 87 is formed in the lower wall 86c in such a manner as to penetrate the lower wall 86c in the up-down direction. The cable passage hole 87 is formed into a slit shape extending in a front-rear direction. The cable passage hole 87 is positioned at the rear and above the cable support portion 41e (Figure 4) and below the sub tube 19R. Additionally, the cable passage hole 87 is positioned further forwards than a coupling portion 18b between a rear portion of the seat rail 18R and the sub tube 19R. The cable passage hole 87 is covered from above by the sub tube 19R.

A first cable support piece 88a that extends downwards from an inner surface of the sub tube 19R in the vehicle width direction is provided on the sub tube 19R on the right side. The first cable support piece 88a extends downwards from the sub tube 19R to the rear, and a lower end portion thereof is positioned above a rear edge portion of the cable passage hole 87.

As illustrated in Figures 3 and 7, a second cable support piece 88b positioned above the first cable support piece 88a is provided on an inner surface in the vehicle width direction of the seat rail 18R on the right side. The second cable support piece 88b is positioned at the front of the coupling portion 18b and at the rear of the box main body 33a.

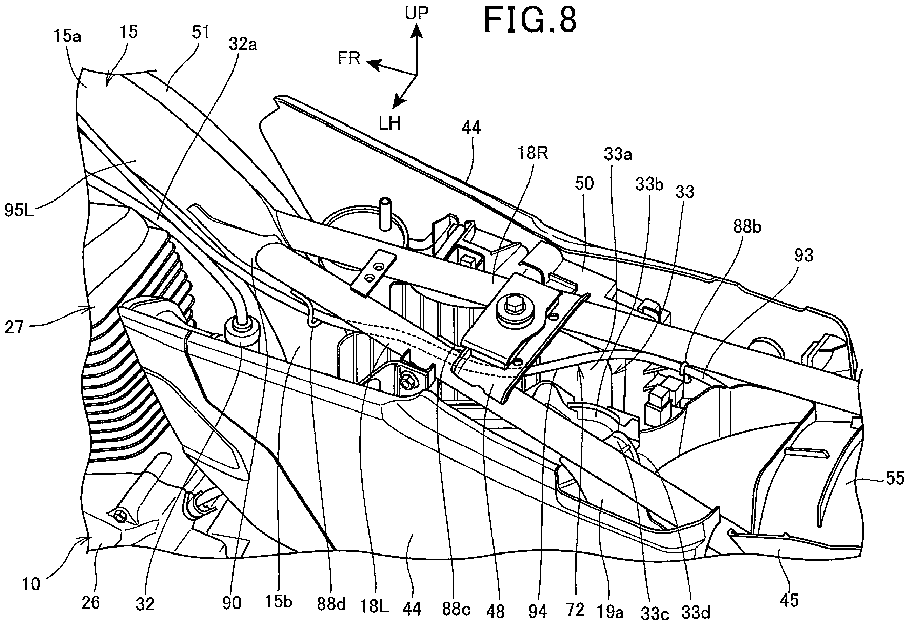

Figure 8 is a perspective view illustrating a state where the linking brake cable 72 is laid out at a circumferential portion of the seat rails 18L, 18R.

Referring to Figures 3 and 8, a third cable support piece 88c positioned further forwards than the second cable support piece 88b is provided on an inner surface in the vehicle width direction of the seat rail 18L on the left side. The third cable support piece 88c overlaps the box main body 33a from above when seen from above.

A fourth cable support piece 88d positioned further forwards than the third cable support piece 88c is provided at a front end portion of the seat rail 18L on the left side. The fourth cable support piece 88d extends downwards from the seat rail 18L. The fourth cable support piece 88d is positioned further rearwards than a connecting portion 90 between a front end of the seat rail 18L and a rear surface of the main tube 15.

As illustrated in Figures 2 and 3, a fifth cable support piece 88e positioned further forwards than the fourth cable support piece 88d is provided on a left side surface of a front end portion of the main tube 15.

Here, a state is described where the linking brake cable 72 is laid out.

As illustrated in Figure 4, the linking brake cable 72 is pulled out obliquely upwards to the rear from the cable support portion 41e of the footrest bracket 41 positioned on the right side of the vehicle body and is passed into the cable passage hole 87 of the rear mudguard front portion 55 from below.

The linking brake cable 72 is restricted from moving more than a predetermined amount in the vehicle width direction by the cable passage hole 87. Since the cable passage hole 87 has the slit shape that is long in the front-rear direction, the linking brake cable 72 is allowed to move in the front-rear direction within the cable passage hole 87.

As illustrated in Figures 4, 6 and 7, the linking brake cable 72 that is passed into the cable passage hole 87 is bent back upwards towards the front in a position above the cable passage hole 87 to extend to the front. That is, the linking brake cable 72 includes a curved portion 91 projecting to the rear when seen from the side near the cable passage hole 87 where the linking brake cable 72 is curved to extend to the front.

The curved portion 91 is covered from an external side by the mudguard side surface portion 86, the sub tube 19R, the rear-side gusset 19a, and the seat rail 18R. The curved portion 91 is positioned at the front of the coupling portion 18b and at the rear of the battery 50.

In the linking brake cable 72, a lower straight-line portion 92 that extends substantially linearly on a side closer to a rear end portion (a side closer to the cable support portion 41e) than the curved portion 91 is supported by the first cable support piece 88a. The first cable support piece 88a is in abutment with a lower surface of the lower straight-line portion 92 near the curved portion 91 and supports the linking brake cable 72 from below but is not in abutment with the curved portion 91.

When the brake pedal 38 is operated, although a deflection is generated in the linking brake cable 72 by the movement of the inner cable 72b, in this embodiment, since the first cable support piece 88a supports the lower straight-line portion 92 from below but does not support the curved portion 91, a relatively large deflection amount of the linking brake cable 72 in the up-down and front-rear directions can be permitted. Due to this, the deflection of the linking brake cable 72 can be prevented from being interrupted by the first cable support piece 88a, whereby the linking brake cable 72 is allowed to operate smoothly.

In the linking brake cable 72, an upper straight-line portion 93 that is directed substantially linearly to the front on a side closer to a front end portion (a side closer to the front wheel brake operating portion 58) than the curved portion 91 is supported by the second cable support piece 88b. The linking brake cable 72 is guided by the cable passage hole 87 and the second cable support piece 88b so as to follow internal surfaces of the sub tube 19R and the seat rail 18R that are both on the right side.

In the linking brake cable 72, a section from a portion supported by the cable support portion 41e to a portion supported by the second cable support piece 88b is laid out so as to follow the sub tube 19R and the seat rail 18R that are both on the right side and is disposed in a space between the rear mudguard front portion 55 and the seat rail 18R. In this embodiment, since the upper straight-line portion 93 is provided that is directed to the front on the side closer to the front end portion than the curved portion 91, the curved portion 91 is prevented from being bent largely in the vehicle width direction.

That is, the linking brake cable 72 includes the lower straight-line portion 92 and the upper straight-line portion 93 across the curved portion 91, the lower straight-line portion 92 and the upper straight-line portion 93 are supported on the vehicle body side via the first cable support piece 88a and the second cable support piece 88b, and the curved portion 91 is not supported directly on the vehicle body side.

As illustrated in Figures 3 and 8, the linking brake cable 72 is bent to the left side ahead of the second cable support piece 88b extends forward toward the seat rail 17L, and is supported by the third cable support piece 88c of the seat rail 18L. That is, the linking brake cable 72 includes a transverse straddling portion 94 where the linking brake cable 72 extends from the seat rail 18R on the right side to the seat rail 18L on the left side by straddling a central portion defined between the seat rail 18R and the seat rail 18L in the vehicle width direction while keeping extending to the front. The transverse straddling portion 94 passes below the fuel tank 35 and the cross member 48 and is laid out between the seat rails 18L, 18R and an upper surface of the box main body 33a of the air cleaner box 33. The lid portion 33b of the air cleaner box 33 is disposed further leftwards than the transverse straddling portion 94, and the transverse straddling portion 94 does not overlap the lid portion 33b when seen from above. Due to this, the linking brake cable 72 does not interrupt the attachment and detachment of the lid portion 33b, facilitating the maintenance of the air cleaner element.

The linking brake cable 72 extends to the front so as to follow an internal surface of the seat rail 18L ahead of the third cable support piece 88c and is supported by the fourth cable support piece 88d below a front end portion of the seat rail 18L. Thereafter, the linking brake cable 72 straddles the seat rail 18L to extend outwards in the vehicle width direction and extends to the front so as to follow an external surface of the connecting portion 90 of the seat rail 18L, reaching a left side surface of a rear end portion of the main tube front portion 15a.

Then, as illustrated in Figures 2 and 3, the linking brake cable 72 extends upwards to the front along a left side surface 95L of the main tube front portion 15a and is supported by the fifth cable support piece 88e at the rear of the headstock 14.

The linking brake cable 72 curves ahead of the fifth cable support piece 88e and on a left side of the headstock 14 to extend downwards, further curves below a left side surface of a rear portion of the front mudguard 46 to extend to the front, and is connected to the operation input arm portion 58b of the front wheel brake operating portion 58 at a front end portion thereof. The linking brake cable 72 is supported by a sixth cable support piece 88f provided on a left side surface of a rear portion of the front mudguard 46.

In this way, the linking brake cable 72 is laid out from the cable support portion 41e along the sub tube 19R and the seat rail 18R on the right side of the vehicle body to extend upwards, is passed from the right side of the vehicle body to the seat rail 18L on the left side of the vehicle body below the seat rails 18L, 18R near the curved portion 91 and before the linking brake cable 72 reaches the main tube 15, and thereafter passes the left side of the vehicle body to extend to the front to be connected to the front wheel brake operating portion 58 on the left side of the vehicle body. By adopting this configuration, since the linking brake cable 72 can be laid out from the right side of the vehicle body to the left side of the vehicle body at the rear of the main tube 15 and near the curved portion 91, the curved portion 91 and the transverse straddling portion 94 are allowed to curve moderately, whereby the curvature of the linking brake cable 72 can be reduced. Due to this, the resistance generated in operating the linking brake cable 72 can be reduced, whereby the linking brake cable 72 can be operated smoothly. Additionally, since the linking brake cable 72 extends to the front along the left side surface 95L of the main tube front portion 15a, a space can be secured on a side of the main tube front portion 15a where a right side surface 95R is provided, whereby the main harness 51 can be laid out along the right side surface 95R.

Additionally, since the linking brake cable 72 is disposed along the left side surface 95L of the main tube front portion 15a, the throttle cable 32a and the linking brake cable 72, which constitute cables of the operation system, can be disposed altogether on the left side of the vehicle body. Due to this, the cables of the operation system and the main harness 51 of the electric system can be disposed separately on the left and right sides of the main tube front portion 15a.

Additionally, since the air cleaner box 33 is provided on the left side of the vehicle body and the battery 50 is provided on the right side of the vehicle body so as to be aligned side by side with the air cleaner box 33, the fuel supply system 32 and the air cleaner box 33, which are disposed on the left side of the vehicle body, can be disposed linearly in the front-rear direction with good efficiency, and the main harness 51 can easily be laid out from the battery 50 on the right side of the vehicle body on the right side surface 95R of the main tube front portion 15a.

As illustrated in Figure 1, a meter 100, which is configured to display information on the speed of the motorcycle 1 or the like thereon, is provided at the front of the handlebar 21. The meter 100 is covered from the front by the front cover 43.

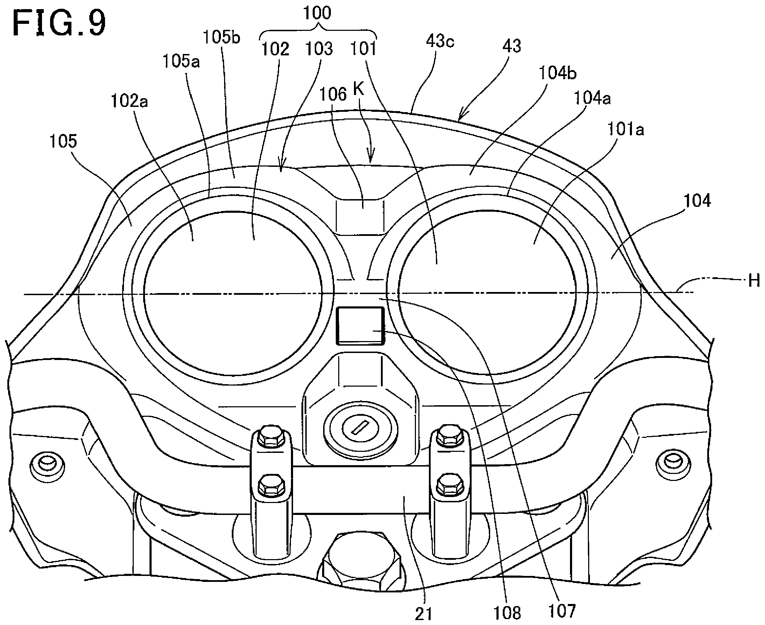

Figure 9 is a view of a circumferential portion of the meter 100 as viewed from a rear upper portion.

As illustrated in Figures 1 and 9, the front cover 43 includes a plate-shaped front cover upper portion 43b extending upward to the rear when seen from the side above the lamp 43a. The front cover upper portion 43b is formed into the shape of a curved surface projecting to the front in such a manner that a central portion in the vehicle width direction expands to the front.

The meter 100 has an upper surface that is inclined obliquely from a front top portion to a rear bottom portion so that the rider who is seated on the seat 13 to look down at the meter 100 disposed ahead of and below the eyes of the rider can easily visualize the meter 100.

The front cover upper portion 43b includes a meter visor portion 43c extending upwards to the rear to cover the meter 100 from above.

The meter 100 includes a revolution speed meter 101 configured to indicate a revolution speed of the engine 10, a speedometer 102 configured to indicate a speed of the motorcycle 1, and a housing 103 configured to house the revolution speed meter 101 and the speedometer 102. The meter 100 is a double (twin) meter in which the revolution speed meter 101 and the speedometer 102 are disposed side by side in the left-right direction with a predetermined clearance provided therebetween.

The revolution speed meter 101 and the speedometer 102 have a display portion 101a and a display portion 102a each formed in a circular shape, respectively, on upper surfaces thereof. The display portion 101a and the display portion 102a are formed into circular shapes whose outside diameters are substantially equal to each other and are disposed substantially laterally symmetrical with each other with respect to a center in the vehicle width direction.

The housing 103 includes a one-side housing 104 configure to house the revolution speed meter 101 and the other-side housing 105 configured to house the speedometer 102, and the one-side housing 104 and the other-side housing 105 are formed integrally.

The one-side housing 104 includes an upper surface portion 104a that is formed into an annular shape so as to follow an external shape of the display portion 101a and an inclined surface portion 104b that slopes downwards to a far side of the display portion 101a while expanding diametrically from the upper surface portion 104a. The display portion 100a is exposed upwards to the rear from a circular opening portion of the upper surface portion 104a.

Additionally, the other-side housing 105 includes an upper surface portion 105a that is formed into an annular shape so as to follow an external shape of the display portion 102a and an inclined surface portion 105b that slopes downwards to a far side of the display portion 102a while expanding diametrically from the upper surface portion 105a. The display portion 102a is exposed upwards to the rear from a circular opening portion of the upper surface portion 105a.

The inclined surface portion 104b and the inclined surface portion 105b are formed in at least a region lying ahead of an imaginary straight line H that connects a center of the display portion 101a and a center of the display portion 102a together in the vehicle width direction.

The inclined surface portion 104b and the inclined surface portion 105b are formed so as to intersect each other at a central portion in the vehicle width direction and near the straight line H and to slope downwards to the far sides of the display portions 101a, 102a while expanding diametrically. Due to this, a recess portion 106 that is recessed relative to the upper surface portions 104a, 105a is formed ahead of the straight line H and between an inner end portion in the vehicle width direction of the inclined surface portion 104b and an inner end portion in the vehicle width direction of the inclined surface portion 105b.

The recess portion 106 extends from the vicinity of the straight line H to the position of a rear surface of the meter visor portion 43c. That is, the recess portion 106 enters from a front end portion as far as the vicinity of the centers of display portions 101a, 102a in relation to a radial direction of the upper surface portions 104a, 105a.

The recess portion 106 expands not only in size in the vehicle width direction but also in depth as the recess portion 106 extends from the straight line H side to the meter visor portion 43c side.

As a result of the recess portion 106 being formed at the front portion of the housing 103 in this way, a space k defined by the meter visor portion 43c and the recess portion 106 is formed between the housing 103 and the meter visor portion 43c. Not only can an external appearance of the housing 103 be made clear to thereby improve the external appearance of the housing 103, but also the housing 103 can be formed compact by providing the space K.

A flat portion 107 is formed at a portion lying behind the recess portion 106 and the straight line H at a central portion in the vehicle width direction where the upper surface portion 104a and the upper surface portion 105a intersect. An emblem 108 is disposed on the flat portion 107.

Thus, as has been described heretofore, according to the embodiment to which the present invention is applied, the motorcycle 1 includes the body frame F including the main tube 15 extending from the headstock 14 to the rear of the vehicle body and the seat rails 18L, 18R extending from the main tube 15 to the rear, the front wheel brake operating portion 58 configured to brake the front wheel 2, the rear wheel brake operating portion 61 configured to brake the rear wheel 3, and the linked brake system 70 configured to also apply the braking force to the front wheel brake operating portion 58 in association with the operation of the brake pedal 38 of the rear wheel brake operating portion 61, the front wheel brake operating portion 58 is the drum brake disposed on the left side of the vehicle body, the brake pedal 38 is disposed on the right side of the vehicle body, the linked brake system 70 includes the equalizer 71 attached to the brake pedal 38, and the linking brake cable 72 configured to connect the equalizer 71 and the front wheel brake operating portion 58, the linking brake cable 72 pulled out from the equalizer 71 to the rear extends to the front via the curved portion 91 that projects to the rear to be connected to the front wheel brake operating portion 58, and the linking brake cable 72 passes below the seat rails 18L, 18R from the right side of the vehicle body to the left side of the vehicle body and extends to the front of the vehicle body along the left side of the main tube 15. By adopting this configuration, the linking brake cable 72 can be passed from the right side of the vehicle body to the left side of the vehicle body in the position lying near the curved portion 91 below the seat rails 18L, 18R at the rear of the main tube 15, and the portion of the linking brake cable 72 where it is passed from the right side of the vehicle body to the left side of the vehicle body and the curved portion 91 can be curved moderately. This can reduce the curvature of the linking brake cable 72 and can reduce, in turn, the resistance in operating the linking brake cable 72, whereby the linking brake cable 72 can be operated smoothly. Additionally, since the linking brake cable 72 is passed to the left side on the side thereof lying below the seat rails 18L, 18R and then extends to the front of the vehicle body along the left side of the main tube 15, the space can be secured on the right side of the main tube 15, so that the main harness, which is the cable-shaped member, can be disposed in the space, thereby enhancing the degree of freedom in arranging the main harness.

In addition, since the linking brake cable 72 is passed from the right side of the vehicle body to the left side of the vehicle body below the seat rails 18L, 18R after the linking brake cable 72 is directed to the front of the vehicle body at the portion lying closer to the front wheel brake operating portion 58 than the curved portion 91, the curved portion 91 is prevented from being curved largely in the left-right direction. This can reduce the resistance in operating the linking brake cable 72 on the circumference of the curved portion 91, whereby the linking brake cable 72 can be operated smoothly.

The linking brake cable 72 includes the lower straight-line portion 92 and the upper straight-line portion 93 across the curved portion 91, and the lower straight-line portion 92 and the upper straight-line portion 93 are supported on the vehicle body side. Since this prevents the curved portion 91 from being supported directly on the vehicle body side, thereby providing a high degree of freedom in deflection of the curved portion 91, the curved portion 91 is allowed to deflect easily, whereby the linking brake cable 72 can be operated smoothly.

Further, the seat rails 18L, 18R constitute the pair of left and right tubes, and the linking brake cable 72 is pulled out to the rear from the equalizer 71 to be supported on the seat rail 18R on the right side and is thereafter passed from the right side of the vehicle body to the left side of the vehicle body to be supported on the seat rail 18L on the left side. This allows the linking brake cable 72 to be supported on the vehicle body side before and after the portion where the linking brake cable 72 is passed from the right side of the vehicle body to the left side of the vehicle body, whereby the layout routing of the linking brake cable 72 can be maintained as required.

The seat rails 18L, 18R constitute the pair of left and right tubes, and the linking brake cable 72 is laid out in the space between the rear mudguard 47 and the seat rails 18L, 18R and extends to the front along the seat rail 18L on the left side, being laid out towards the front of the vehicle body along the left side of the main tube 15 via the connecting portion 90 between the main tube 15 and the seat rail 18L on the left side. This allows the linking brake cable 72 to be laid out by making effective use of the space between the rear mudguard 47 and the seat rails 18L, 18R, and the linking brake cable 72 can be guided to the left side by the simple structure made up of the connecting portion 90 between the main tube 15 and the seat rail 18L on the left side.

Further, the intake system part 30 is disposed below the seat rails 18L, 18R and ahead of the rear mudguard 47, and the linking brake cable 72 is laid out between the seat rails 18L, 18R and the intake system part 30. This allows the linking brake cable 72 to be laid out by making effective use of the space between the seat rails 18L, 18R and the intake system part 30.

The air cleaner box 33 of the intake system part 30 is disposed side by side with the battery 50 in the vehicle width direction, the battery 50 is positioned below the seat rail 18R on the right side, and the main harness 51 connected to the battery 50 is laid out along the right side of the main tube 15. This allows the main harness 51 to be laid out from the battery 50 disposed on the right side of the vehicle body below the seat rail 18R on the right side along the right side of the main tube 15, whereby the main harness 51 is easily laid out on the side of the main tube 15 that is opposite to the side where the linking brake cable 72 is laid out.

The above-described embodiment represents one aspect to which the present invention is applied, and hence, the present invention is not limited to the above-described embodiment.

In the embodiment, while the present invention is described as being applied to the motorcycle 1, the present invention is not limited thereto, and is only limited by the appended claims, and hence, the present invention can be applied to a three-wheeled saddle-riding type vehicle with two front wheels or two rear wheels, a saddle-riding type vehicle including four wheels or more, and a saddle-riding type vehicle such as a scooter and the like.

### [Reference Signs List]

- 1: Motorcycle (Saddle-riding type vehicle)
- 2: Front wheel
- 3: Rear wheel
- 14: Headstock
- 15: Main tube
- 18L, 18R: Seat rail
- 30: Intake system part
- 33: Air cleaner box
- 38: Brake pedal (Brake actuator)
- 47: Rear mudguard
- 50: Battery
- 51: Main harness
- 58: Front wheel brake operating portion (Front wheel brake)
- 61: Rear wheel brake operating portion (Rear wheel brake)
- 70: Linked brake system
- 71: Equalizer
- 72: Linking brake cable
- 90: Connecting portion
- 91: Curved portion
- 92: Lower straight-line portion
- 93: Upper straight-line portion
- F: Body frame

## Claims

1. A saddle-riding type vehicle comprising: a body frame (F) comprising a main tube (15) extending from a headstock (14) to a rear of a vehicle body and a seat rail (18L, 18R) extending from the main tube (15) to the rear; a front wheel brake (58) configured to brake a front wheel (2); a rear wheel brake (61) configured to brake a rear wheel (3); and a linked brake system (70) configured to apply a braking force to the front wheel brake (58), too, in association with operation of a brake actuator (38) of the rear wheel brake (61), the front wheel brake (58) being a drum brake disposed on a left side of the vehicle body, the brake actuator (38) being disposed on a right side of the vehicle body, the linked brake system (70) comprising an equalizer (71) configured to be attached to the brake actuator (38) and a linking brake cable (72) configured to connect together the equalizer (71) and the front wheel brake (58), the linking brake cable (72) pulled out from the equalizer (71) to the rear extending to a front via a curved portion (91) projecting to the rear to be connected to the front wheel brake (58),
**characterized in that** the linking brake cable (72) is passed from the right side of the vehicle body to the left side of the vehicle body below the seat rail (18L, 18R) and extends to the front of the vehicle body along a left side of the main tube (15).

2. The saddle-riding type vehicle according to Claim 1,
wherein the linking brake cable (72) is passed from the right side of the vehicle body to the left side of the vehicle body below the seat rail (18L, 18R) after the linking brake cable (72) is directed to the front of the vehicle body at a portion thereof lying closer to the front wheel brake (58) than the curved portion (91).

3. The saddle-riding type vehicle according to Claim 1 or 2,
wherein the linking brake cable (72) comprises a lower straight-line portion (92) and an upper straight-line portion (93) across the curved portion (91), and the lower straight-line portion (92) and the upper straight-line portion (93) are supported on the vehicle body.

4. The saddle-riding type vehicle according to any one of Claims 1 to 3,
wherein the seat rail (18L, 18R) comprises a pair of left and right tubes, and
wherein after the linking brake cable (72) is pulled out to the rear from the equalizer (71) and is supported on the seat rail (18R) on a right side, the linking brake cable (72) is passed from the right side of the vehicle body to the left side of the vehicle body and is supported on the seat rail (18L) on a left side.

5. The saddle-riding type vehicle according to any one of Claims 1 to 4,
wherein the seat rail (18L, 18R) comprises a pair of left and right tubes, and
wherein the linking brake cable (72) is laid out in a space between a rear mudguard (47) and the seat rail (18L, 18R) and extends to the front along the seat rail (18L) on the left side to be laid out to the front of the vehicle body along the left side of the main tube (15) via a connecting portion (90) between the main tube (15) and the seat rail (18L) on the left side.

6. The saddle-riding type vehicle according to Claim 5,
wherein an intake system part (30) is disposed below the seat rail (18L, 18R) and ahead of the rear mudguard (47), and
wherein the linking brake cable (72) is laid out between the seat rail (18L, 18R) and the intake system part (30).

7. The saddle-riding type vehicle according to Claim 6,
wherein an air cleaner box (33) of the intake system part (30) is disposed side by side with a battery (50) in a vehicle width direction,
wherein the battery (50) is positioned below the seat rail (18R) on the right side, and
wherein a main harness (51) connected to the battery (50) is laid out along a right side of the main tube (15).

## Patentansprüche

1. Fahrzeug vom Sattelfahrttyp, umfassend: einen Karosserierahmen (F) mit einem Hauptrohr (15), das sich von einem Lenkkopf (14) zu einem hinteren Teil einer Fahrzeugkarosserie erstreckt, und einer Sitzschiene (18L, 18R), die sich von dem Hauptrohr (15) nach hinten erstreckt; eine Vorderradbremse (58), die zum Bremsen eines Vorderrads (2) konfiguriert ist; eine Hinterradbremse (61), die zum Bremsen eines Hinterrads (3) konfiguriert ist; und ein verbundenes Bremssystem (70), das so konfiguriert ist, dass es in Verbindung mit der Betätigung eines Bremsbetätigungselements (38) der Hinterradbremse (61) auch eine Bremskraft auf die Vorderradbremse (58) ausübt, wobei die Vorderradbremse (58) eine Trommelbremse ist, die an einer linken Seite der Fahrzeugkarosserie angeordnet ist, und das Bremsbetätigungselement (38) an einer rechten Seite der Fahrzeugkarosserie angeordnet ist, wobei das verbundene Bremssystem (70) einen Ausgleichsmechanismus (71), der so konfiguriert ist, dass er an der Bremsbetätigungsvorrichtung (38) befestigt werden kann, und ein Verbindungs-Bremskabel (72) umfasst, das so konfiguriert ist, dass es den Ausgleichsmechanismus (71) und die Vorderradbremse (58) miteinander verbindet, wobei sich das Verbindungs-Bremskabel (72), das vom Ausgleichsmechanismus (71) nach hinten gezogen wird, über einen gekrümmten Abschnitt (91), der nach hinten vorsteht, um mit der Vorderradbremse (58) verbunden zu werden, nach vorne erstreckt, **dadurch gekennzeichnet, dass**
das Verbindungs-Bremskabel (72) von der rechten Seite der Fahrzeugkarosserie zur linken Seite der Fahrzeugkarosserie unterhalb der Sitzschiene (18L, 18R) geführt wird und sich entlang einer linken Seite des Hauptrohrs (15) nach vorne der Fahrzeugkarosserie erstreckt.

2. Fahrzeug vom Sattelfahrttyp nach Anspruch 1,
wobei das Verbindungs-Bremskabel (72) von der rechten Seite der Fahrzeugkarosserie zur linken Seite der Fahrzeugkarosserie unterhalb der Sitzschiene (18L, 18R) geführt wird, nachdem das Verbindungs-Bremskabel (72) an einem Abschnitt der Fahrzeugkarosserie, der näher an der Vorderradbremse (58) liegt als der gekrümmte Abschnitt (91), zur Vorderseite der Fahrzeugkarosserie gerichtet ist.

3. Fahrzeug vom Sattelfahrttyp nach Anspruch 1 oder 2,
wobei das Verbindungs-Bremskabel (72) einen unteren geradlinigen Abschnitt (92) und einen oberen geradlinigen Abschnitt (93) über dem gekrümmten Abschnitt (91) aufweist, und der untere geradlinige Abschnitt (92) und der obere geradlinige Abschnitt (93) auf der Fahrzeugkarosserie abgestützt sind.

4. Fahrzeug vom Sattelfahrttyp nach einem der Ansprüche 1 bis 3,
wobei die Sitzschiene (18L, 18R) ein Paar aus einem linken und einem rechten Rohr aufweist, und
wobei, nachdem das Verbindungs-Bremskabel (72) von dem Ausgleichsmechanismus (71) nach hinten herausgezogen und auf der Sitzschiene (18R) auf einer rechten Seite abgestützt ist, das Verbindungs-Bremskabel (72) von der rechten Seite der Fahrzeugkarosserie zur linken Seite der Fahrzeugkarosserie geführt und auf der Sitzschiene (18L) auf einer linken Seite abgestützt wird.

5. Fahrzeug vom Sattelfahrttyp nach einem der Ansprüche 1 bis 4,
wobei die Sitzschiene (18L, 18R) ein Paar aus einem linken und einem rechten Rohr umfasst und
wobei das Verbindungs-Bremskabel (72) in einem Raum zwischen einem hinteren Kotflügel (47) und der Sitzschiene (18L) angeordnet ist, 18R) und sich nach vorne entlang der Sitzschiene (18L) auf der linken Seite erstreckt, die entlang der linken Seite des Hauptrohrs (15) über einen Verbindungsabschnitt (90) zwischen dem Hauptrohr (15) und der Sitzschiene (18L) auf der linken Seite zur Vorderseite der Fahrzeugkarosserie angelegt wird.

6. Fahrzeug vom Sattelfahrttyp nach Anspruch 5,
wobei ein Einlasssystemteil (30) unterhalb der Sitzschiene (18L, 18R) und vor dem hinteren Kotflügel (47) angeordnet ist, und wobei das Verbindungs-Bremskabel (72) zwischen der Sitzschiene (18L, 18R) und dem Einlasssystemteil (30) angeordnet ist.

7. Fahrzeug vom Sattelfahrttyp nach Anspruch 6,
wobei ein Luftfilterkasten (33) des Ansaugsystemteils (30) neben einer Batterie (50) in einer Fahrzeugbreitenrichtung angeordnet ist,
wobei die Batterie (50) unter der Sitzschiene (18R) auf der rechten Seite angeordnet ist, und
wobei ein mit der Batterie (50) verbundener Hauptkabelbaum (51) entlang einer rechten Seite des Hauptrohrs (15) angeordnet ist.

## Revendications

1. Véhicule de type à selle comprenant : un châssis de corps (F) comprenant un tube principal (15) s'étendant depuis un train avant (14) jusqu'à un arrière d'un corps de véhicule et un rail de siège (18L, 18R) s'étendant depuis le tube principal (15) jusqu'à l'arrière ; un frein de roue avant (58) configuré pour freiner une roue avant (2) ; un frein de roue arrière (61) configuré pour freiner une roue arrière (3) ; et un système de frein lié (70) configuré pour appliquer une force de freinage au frein de roue avant (58), aussi, en association avec le fonctionnement d'un actionneur de frein (38) du frein de roue arrière (61), le frein de roue avant (58) étant un frein à tambour disposé sur un côté gauche du corps de véhicule, l'actionneur de frein (38) étant disposé sur un côté droit du corps de véhicule, le système de frein lié (70) comprenant un égalisateur (71) configuré pour être attaché à l'actionneur de frein (38) et un câble de frein de liaison (72) configuré pour relier l'égalisateur (71) et le frein de roue avant (58) l'un à l'autre, le câble de frein de liaison (72) tiré depuis l'égalisateur (71) vers l'arrière s'étendant vers un avant via une portion incurvée (91) se projetant vers l'arrière pour être relié au frein de roue avant (58),
**caractérisé en ce que**
le câble de frein de liaison (72) est passé du côté droit du corps de véhicule au côté gauche du corps de véhicule sous le rail de siège (18L, 18R) et s'étend vers l'avant du corps de véhicule le long d'un côté gauche du tube principal (15).

2. Véhicule de type à selle selon la revendication 1,
dans lequel le câble de frein de liaison (72) est passé du côté droit du corps de véhicule au côté gauche du corps de véhicule sous le rail de siège (18L, 18R) après que le câble de frein de liaison (72) a été dirigé vers l'avant du corps de véhicule au niveau d'une portion de celui-ci reposant plus près du frein de roue avant (58) que la portion incurvée (91).

3. Véhicule de type à selle selon la revendication 1 ou 2,
dans lequel le câble de frein de liaison (72) comprend une portion inférieure en ligne droite (92) et une portion supérieure en ligne droite (93) à travers la portion incurvée (91), et la portion inférieure en ligne droite (92) et la portion supérieure en ligne droite (93) sont supportées sur le corps de véhicule.

4. Véhicule de type à selle selon l'une quelconque des revendications 1 à 3,
dans lequel le rail de siège (18L, 18R) comprend une paire de tubes gauche et droit, et
dans lequel, après que le câble de frein de liaison (72) a été tiré vers l'arrière depuis l'égalisateur (71) et été supporté sur le rail de siège (18R) sur un côté droit, le câble de frein de liaison (72) est passé du côté droit du corps de véhicule au côté gauche du corps de véhicule et est supporté sur le rail de siège (18L) sur un côté gauche.

5. Véhicule de type à selle selon l'une quelconque des revendications 1 à 4,
dans lequel le rail de siège (18L, 18R) comprend une paire de tubes gauche et droit, et
dans lequel le câble de frein de liaison (72) est posé dans un espace entre un garde-boue arrière (47) et le rail de siège (18L, 18R) et s'étend jusqu'à l'avant le long du rail de siège (18L) sur le côté gauche pour être posé sur l'avant du corps de véhicule le long du côté gauche du tube principal (15) via une portion de liaison (90) entre le tube principal (15) et le rail de siège (18L) sur le côté gauche.

6. Véhicule de type à selle selon la revendication 5,
dans lequel une partie de système d'admission (30) est posée sous le rail de siège (18L, 18R) et devant le garde-boue arrière (47), et
dans lequel le câble de frein de liaison (72) est posé entre le rail de siège (18L, 18R) et la partie de système d'admission (30).

7. Véhicule de type à selle selon la revendication 6,
dans lequel un boîtier de purification d'air (33) de la partie de système d'admission (30) est disposé côte à côte avec une batterie (50) dans une direction de largeur de véhicule,
dans lequel la batterie (50) est positionnée sous le rail de siège (18R) sur le côté droit, et
dans lequel un faisceau principal (51) relié à la batterie (50) est posé le long d'un côté droit du tube principal (15).
